# EUROPEAN PATENT SPECIFICATION

(11) **EP 3 586 603 B1**
(45) Date of publication and mention of the grant of the patent: **19.01.2022**
(21) Application number: 19182185.9
(22) Date of filing: 25.06.2019
(51) Int. Cl.: A01F 15/10, A01F 15/07

(54) **BALING SYSTEM**
BALLENPRESSSYSTEM
SYSTÈME DE MISE EN BALLES

(30) Priority: 27.06.2018 US 201816021002
(43) Date of publication of application: 01.01.2020
(73) Proprietor: Deere & Company, Moline, IL 61265 (US)
(72) Inventor: Bruns, Aaron, 68163 Mannheim (DE); Wemhoff, Scott, 68163 Mannheim (DE); Hill, Lenny, 68163 Mannheim (DE); Kaschmitter, Scott L, 68163 Mannheim (DE); Uhlenkott, Jeffrey B, 68163 Mannheim (DE); Boyer, Stanton P, 68163 Mannheim (DE)
(74) Representative: Stein, Stefan

(56) References cited:
- WO-A1-2018/039801
- WO-A2-2011/012960
- US-A1- 2014 144 119
- US-B2- 9 253 948

## Description

Biomass material such as hay, straw and stalks, hereinafter collectively referred to as "forage", is often harvested for feeding or bedding livestock or other animals. Such forage is often gathered and formed into bales for storage and transport until use. US 2014/0144119 A1 and WO 2018/039801 A1 disclose respective accumulating systems for continuous balers.

According to an aspect of the present disclosure, a baling system comprising a baling chamber in which bales are formed. The baling chamber having a first side wall and a second sidewall defining a width of the baling chamber. A rotary feeder to lift forage into the baling chamber, the rotary feeder having a second with less than or equal to the width of the baling chamber. A first lateral forage mover on a first side of the rotary feeder and extending from the rotary feeder outwardly beyond the first side wall. A second lateral forage mover on a second side of the rotary feeder and extending from the rotary feeder outwardly beyond the second sidewall. At least one conveyance system to convey forage to the rotary feeder, the first lateral forage mover and the second lateral forage mover, the at least one conveyance system having a width greater than the width of the baling chamber. In an embodiment, the width of the at least one conveyance system is at least 15,24 cm wider than the width of the baling chamber. In another embodiment, the width of the at least one conveyance system is at least 30,48 cm wider than the width of the baling chamber. In a further embodiment, the rotary feeder has an axial length and wherein the width of the at least one conveyance system is at least 15,24 cm greater than the axial length. In yet another embodiment, the rotary feeder has an axial length and wherein the width of the at least one conveyance system is at least 30,48 cm greater than the axial length. In a further embodiment, the at least one conveyance system forms a floor having a length of at least 2,44 m. According to the invention, the baling system further comprising a forage accumulation chamber in front of the baling chamber, wherein the at least one conveyance system underlies the forage accumulation chamber and the baling chamber. According to the invention, the baling system further comprising a vertical screed belt between the forage accumulation chamber and the baling chamber, the vertical screed belt turning about an end directly opposite to and spaced from the conveyance system by at least 10,16 cm, wherein the vertical screed belt is to lift forage in the forage accumulation chamber. In yet another embodiment, a spacing of the and with respect to the at least one conveyance system is fixed. According to the invention, the forage accumulation chamber comprises a front wall and sidewalls forming an upwardly facing input opening through which forage falls into the forage accumulation chamber. In yet another embodiment, the vertical screed belt forms a moving vertical wall having a height of at least 1,22 m.

According to an aspect of the present disclosure, a baling system comprising a baling chamber. A forage accumulation chamber forward the baling chamber. At least one conveyance system underlying the baling chamber and the forage accumulation chamber. A vertical screed belt between the forage accumulation chamber and the baling chamber, the vertical screed belt turning about an end directly opposite to and spaced from the at least one conveyance system by an uninterrupted gap at least 10,16 cm, wherein the vertical screed belt is to lift forage in the forage accumulation chamber. In yet another embodiment, a spacing of the and with respect to the at least one conveyance system is fixed. In a further embodiment, the forage accumulation chamber comprises a front wall and sidewalls forming an upwardly facing input opening through which forage may fall into the forage accumulation chamber. In yet another embodiment, the vertical screed belt forms a moving vertical wall having a height of at least 1,22 m. In an embodiment, the baling system further comprising a rotary feeder at an end of the at least one conveyance system, the rotary feeder having a width less than a width of the at least one conveyance system. In another embodiment, the baling system comprising a first auger on a first end of the rotary feeder and a second auger on a second end of the rotary feeder. In yet another embodiment, the width of the at least one conveyance system is at least 15,24 cm greater than the width of the rotary feeder.

A method comprising: conveying forage with at least one conveyance system through an uninterrupted gap of at least 10,16 cm extending from the at least one conveyance system to a vertical screed belt such that the forage is conveyed from an accumulation chamber into a baling chamber; lifting the forage within the accumulation chamber with the vertical screed belt as the forage is being conveyed directly beneath the vertical screed belt. In an embodiment, the method further comprising: conveying a mat of the forage having a first width to a rotary feeder having a second width less than the first width; inwardly conveying sides of the mat to the rotary feeder; lifting the forage with the rotary feeder into the baling chamber.

### BRIEF DESCRIPTION OF THE DRAWINGS

Figure 1 is a top view schematically illustrating portions of an example baling system.
Figure 2 is a side view schematically illustrating portions of the example baling system of Figure 1.
Figure 3 is a flow diagram of an example baling method.
Figure 4 is a side view schematically illustrating portions of an example baling system.
Figure 5 is a flow diagram of an example baling method.
Figure 6 is a top view schematically illustrating portions of an example baling system.
Figure 7 is a side view schematically illustrating portions of the example baling system of Figure 6.
Figure 8 is a front perspective view of an example baling system.
Figure 9 is a sectional view of the example baling system of Figure 8.
Figure 11 is a sectional view of the example baling system of Figure 8.
Figure 12 is a sectional view of the example baling system of Figure 8.

Throughout the drawings, identical reference numbers designate similar, but not necessarily identical, elements. The figures are not necessarily to scale, and the size of some parts may be exaggerated to more clearly illustrate the example shown. Moreover, the drawings provide examples and/or implementations consistent with the description; however, the description is not limited to the examples and/or implementations provided in the drawings.

### DETAILED DESCRIPTION OF EXAMPLES

Disclosed herein are example baling systems and methods that facilitate the formation of bales of forage. In some implementations, the disclosed systems and methods facilitate the forming of robust, denser bales. In other implementations, the disclosed systems and methods facilitate more efficient baling or harvesting of forage material by increasing the speed at which such bales may be harvested with fewer breakdowns or plugging.

In some implementations, the disclosed systems and methods provide for more robust bales having a greater density along shoulders of such bales. Such systems and methods laterally move and then compress an additional volume or mass of forage along the sides or shoulders of the bale being formed. The greater density along the shoulders of the bales facilitates more reliable handling and stacking of such bales. The increased density of the bales further facilitates lower-cost storage and transport of such bales.

In some implementations, the disclosed systems and methods convey a mat of the forage having a first width to a rotary feeder having a second width less than the first width. Sides of the mat may be inwardly conveyed to the rotary feeder, wherein the rotary feeder lifts the forage into the baling chamber. In such implementations, the forage is additionally compressed and gathered along the sides of the bale being formed to provide stronger more robust shoulders and higher density bales.

In some implementations, the disclosed systems and methods increase the speed at which bales may be harvested by facilitating continuous harvesting of forage with fewer interruptions. During periods of time during which a completed bale is discharged, such systems and methods allow forage to be accumulated in an accumulation chamber. To reduce the likelihood of the accumulated forage plugging the baling system, the disclosed systems and methods utilize a "live wall" provided by a vertical screed conveyor belt that extends between the accumulation chamber and a baling chamber. The vertical screed conveyor lifts (and rolls) excess forage within the accumulation chamber as other forage is being conveyed through an uninterrupted gap directly beneath the vertical screed conveyor into the baling chamber.

Disclosed is an example baling system that may include a baling chamber in which bales are formed. The baling chamber has a first side wall and a second sidewall defining a width of the baling chamber. The system may further include a rotary feeder, a first lateral forage mover, a second lateral forward mover and at least one conveyance system. The rotary feeder lifts forage into the baling chamber and has a second with less than or equal to the width of the baling chamber. The first lateral forage mover is on a first side of the rotary feeder and extends from the rotary feeder outwardly beyond the first side wall. The second lateral forage mover is on a second side of the rotary feeder and extends from the rotary feeder outwardly beyond the second sidewall. The at least one conveyance system conveys forage to the rotary feeder, the first lateral forage mover and the second lateral forage mover, wherein the at least one conveyance system has a width greater than the width of the baling chamber. The at least one conveyance system may comprise a conveyor belt, a conveyor chain, end-to-end and/or side-by-side conveyor belts, end-to-end and/or side-by-side conveyor chains or other mechanisms for carrying and conveying forage.

Disclosed is an example baling system that may include a baling chamber, a forage accumulation chamber forward the baling chamber, at least one conveyance system underlying the baling chamber and the forage accumulation chamber and a vertical screed belt between the forage accumulation chamber and the baling chamber. The vertical screed belt turns about an end directly opposite to and spaced from the at least one conveyance system by an uninterrupted gap of at least 10,16 cm. The vertical screed belt lifts forage in the forage accumulation chamber.

Disclosed is an example method which may involve conveying forage with at least one conveyance system through an uninterrupted gap extending from the at least one conveyance system to a vertical screed belt such that the forage is conveyed from an accumulation chamber into a baling chamber. Disclosed is an example method that may further or alternatively convey a mat of the forage having a first width to a rotary feeder having a second width less than the first width. Sides of the mat may be inwardly conveyed to the rotary feeder, wherein the rotary feeder lifts the forage into the baling chamber.

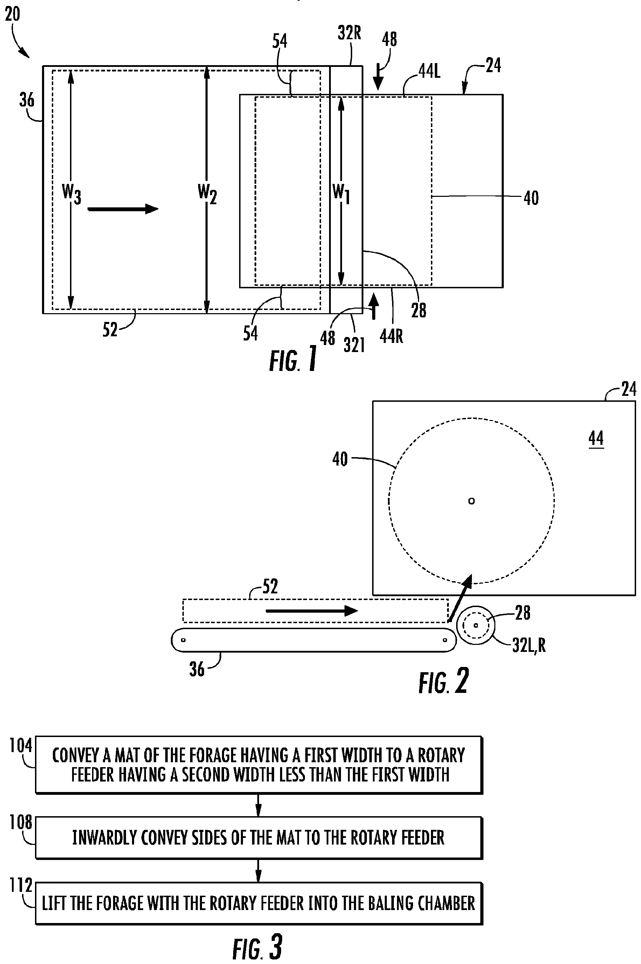

Figures 1 and 2 schematically illustrate portions of an example forage baling system 20. System 20 facilitates the forming of more robust and denser bales. System 20 comprises baling chamber 24, rotary feed 28, lateral forage movers 32R, 32L (collectively referred to as lateral forage movers 32) and at least one conveyance system 36.

Baling chamber 24 comprise a chamber in which bales of forage, such as bale 40, are formed. In the example illustrated, baling chamber 24 is configured to form what are referred to as "round bales". In other implementations, baling chamber 24 may be configured to form a square or rectangular bales. For purposes of this disclosure, the phrase "configured to" denotes an actual state of configuration that fundamentally ties the stated function/use to the physical characteristics of the feature proceeding the phrase "configured to". Baling chamber 24 may utilize an array of endless conveyance systems within the interior of baling chamber 24 which are driven and tensioned so as to wrap forage into a bale.

Baling chamber 24 comprises opposing sidewalls 44R, 44L (collectively referred to as sidewalls 44). Sidewalls 44 define an internal width of the baling chamber 24. Forage being wound or otherwise compacted within baling chamber 24 is contained by such sidewalls 44. The spacing between the opposing sidewalls 44, defining the internal width, controls the width of bale 44. As will be described hereafter, a greater volume or mass of forage is provided along such sidewalls 44 such that the shoulders of the resulting bale 40 are more dense and are more robust.

Rotary feeder 28 feeds forage into the mechanisms that compress and wind the forage. Rotary feeder 28 lifts the forage into the baling chamber. Rotary feeder 28, sometimes referred to as a "stuffer roll", stuffs forage into the volume in which the forage is wound or compacted. Rotary feeder 28 has a width W1 less than or equal to the width of baling chamber 24. Rotary feeder 28 is generally centered within baling chamber 24. In one implementation, rotary feeder 28 has a width W1 equal to the internal with the baling chamber 24.

Lateral forage movers 32 extend on opposite sides of rotary feeder 28. Lateral forage movers 32 extend from rotary feeder 28 outwardly beyond their respective sidewalls 44. Lateral forage mover 32R extends outwardly beyond sidewall 44R. Lateral forage mover 32L extends outwardly beyond sidewall 44L. as indicated by arrows 48, lateral forage movers 32 latterly move forage received from the at least one conveyance system 36 inward, towards a centerline of the baling chamber 24, towards the center of rotary feeder 28.

In one implementation, lateral forage movers 32 each comprise an auger which, upon being rotated, latterly moves forage inward towards rotary feeder 28. In one implementation, rotary feeder 28 and the augers providing lateral forage movers 32 are all mounted on a single shaft. In another implementation, the augers providing lateral forage movers 32 may be operably coupled to the shaft of rotary feeder 28 so as to be driven at a different proportional speed as compared to rotary feeder 28. In yet other implementations, forage movers 32 may be driven independent of rotary feeder 28.

In some implementations, lateral forage movers 32 may be driven independent of one another. For example, in one implementation, lateral forage mover 32R may be driven at a different speed as compared to lateral forage mover 32L. In such an implementation, lateral forage movers 32 may be driven at different speeds to accommodate varying harvesting conditions. In other implementations, lateral forage movers 32 may comprise other mechanisms to latterly move or otherwise convey forage received from conveyance system 36 towards rotary feeder 28. For example, lateral forage movers 32 may alternatively comprise conveyance systems, reciprocating plates and the like.

The at least one conveyance system 36 comprises at least one conveyance system that collectively convey forage to rotary feeder 28 as well as to lateral forage movers 32. The at least one conveyance system 36 may comprise a conveyor belt, a conveyor chain, end-to-end and/or side-by-side conveyor belts, end-to-end and/or side-by-side conveyor chains or other mechanisms for carrying and conveying forage. The at least one conveyance system 36 has a collective width W2 greater than the width W1 of baling chamber 24. In one implementation, the at least one conveyance system 36 comprises a single conveyance belt rotating about to spaced rotational axes. In other implementations, the least one of a conveyance system 36 comprises a plurality of side-by-side conveyor belts or chains. In yet other implementations, the least one conveyance system 36 comprises a series of end-to-end conveyor belts or chains.

Because width W2 of the at least one conveyance system 36 is greater than width W1, the at least one conveyance system 36 may convey or transport a larger mat 52 of forage, a mat of forage also having a width greater than the width W1 of rotary feeder 28. As a result, the at least one conveyance system 36 provides an additional volume or mass of forage outwardly beyond the ends of rotary feeder 28. This additional volume or mass 54 of forage is engaged by lateral forage movers 32 and inwardly moved to rotary feeder 28. As a result, a greater volume or mass of forage is provided along the axial end portions of rotary feeder 28. This results in a greater volume or mass of forage being deposited along the sides of baling chamber 24, along or adjacent to sidewalls 44. Consequently, the resulting bale 40 has a greater density of forage along its shoulders, enhancing the robustness of bale 40.

In one implementation, the width W2 of the at least one conveyance system 36 is at least 15,24 cm wider than the width W1 of baling chamber 24. In one implementation, the width W2 of the at least one conveyance system 36 is at least 30,48 cm wider than the width W1 of baling chamber 24. In one implementation, the rotary feeder 28 has an axial length and the width W2 of the at least one conveyance system 36 is at least 15,24 cm greater than the axial length. In one implementation, the rotary feeder 28 has an axial length and the width W2 of the at least one conveyance system 36 is at least 30,48 cm greater than the axial length. In one implementation, the least one conveyance system 36 forms a floor upon which forage is conveyed, wherein the moving floor has a length of at least 2,44 m. In one implementation, the least one conveyance system 36 forms a floor of an accumulation chamber in which forage is accumulated, such as during periods of time during which a completed bale 40 is being discharged. In one implementation, the at least one conveyance system 236 has a width W2 of 1,83 m while the baling chamber 24 has a width W1 of 1,52 m. In another implementation, chamber 24 has a width W1 of 1,22 m. In one implementation, the at least one conveyance system 36 forms a floor of an accumulation chamber that has an upwardly facing opening through which forage may fall into the accumulation chamber.

Figure 3 is a flow diagram of an example method 100 for harvesting a bale of forage. Method 100 facilitates the formation of more robust bales having shoulders with a higher density of forage material. Although method 100 is described in the context of being carried out by baling system 20, it should be appreciated that method 100 may likewise be carried out with any of the disclosed baling systems or similar baling systems.

As indicated by block 104, the least one conveyance system 36 conveys a mat 52 of forage having a first width W3 to a rotary feeder 28 having a second width W1 less than the first width W3. In one implementation, the width W3 of the mat 52 may be equal to with W2, the width of the at least one conveyance system 36.

As indicated by block 108, lateral forage movers 32 inwardly convey sides or side portions 54 of the mat 52 inwardly, towards the center line of rotary feeder 28, to rotary feeder 28. As indicated by block 112, the rotary feeder 28 lifts the forage into the baling chamber 24, between sidewalls 44. The additional forage laterally conveyed by lateral forage movers 32 provides a greater volume or mass of forage along the axial end portions of rotary feeder 28. This results in a greater volume or mass of forage is deposited along the sides of baling chamber 24, along or adjacent to sidewalls 44. Consequently, the resulting bale 40 has a greater density of forage along its shoulders, enhancing the robustness of bale 40.

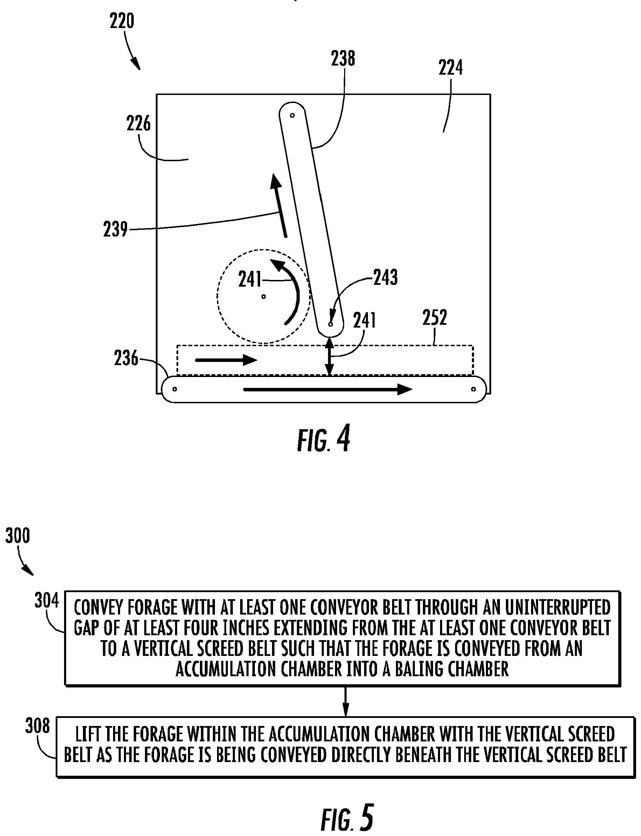

Figure 4 schematically illustrates portions of an example baling system 220. Baling system 220 increases the speed at which bales may be harvested by facilitating continuous harvesting of forage with fewer interruptions. During periods of time during which a completed bale is discharged, baling system 220 accumulates forage in an accumulation chamber. To reduce the likelihood of the accumulated forage plugging the baling system, baling system 220 utilizes a "live wall" provided by a vertical screed conveyance system that extends between the accumulation chamber and a baling chamber. The vertical screed conveyor lifts (and rolls) excess forage within the accumulation chamber as other forage is being conveyed directly beneath the vertical screed conveyor into the baling chamber. Baling system 220 comprises baling chamber 224, forage accumulation chamber 226 at least one conveyance system 236 and vertical screed belt 238.

Baling chamber 224 is similar to baling chamber 24 described above. Baling chamber 224 comprise a chamber in which bales of forage, such as bale 40 (shown in 1), are formed. In the example illustrated, baling chamber 224 is configured to form what are referred to as "round bales". In other implementations, baling chamber 224 may be configured to form a square or rectangular bale. Baling chamber 224 may utilize an array of endless conveyance systems within the interior of baling chamber 224 which are driven and tensioned so as to wrap forage into a bale.

Accumulation chamber 226 comprises a chamber having an interior in which forage is accumulated prior to being conveyed or otherwise moved into baling chamber 224. In one implementation, accumulation chamber 226 may be in the form of a hopper into which forage is deposited. In one implementation, accumulation chamber 226 accumulates forage during periods of time that baling chamber 224 is temporarily pausing the compacting are winding of a bale, such as when a completed bale is being discharged. In one implementation, accumulation chamber 226 has a length extending between vertical screed belt 238 and a front for wall of at least 1,85 m. In one implementation, accumulation chamber 226 has a forage containing volume of at least 240 cubic feet. In one implementation, accumulation chamber 226 may have an upwardly facing opening through which forage may fall into the accumulation chamber 226. For example, in one implementation, accumulation chamber 226 may form a hopper into which forage is blown or otherwise received from the combine or other harvester. In other implementations, accumulation chamber 226 may receive forage picked from the ground, such as when the forages resting upon the ground in the form of a row.

The least one conveyor 236 comprises at least one conveyance system that underlies baling chamber 224 and accumulation chamber 226 so as to collectively convey forage from accumulation chamber 226 into baling chamber 224. The at least one conveyor 236 may comprise a conveyor belt, a conveyor chain, end-to-end and/or side-by-side conveyor belts, end-to-end and/or side-by-side conveyor chains or other mechanisms for carrying and conveying forage. In one implementation, the at least one conveyance system 36 comprises a single conveyor belt. In other implementations, the least one of a conveyor 236 comprises a plurality of side-by-side conveyor belts. In yet other implementations, the least one conveyor 236 comprises a series of end-to-end conveyor belts.

Vertical screed belt 238 comprises a continuous belt rotatable about two spaced rotational axes so as to form a vertical moving wall when being rotated. Belt 238 is rotatable in the direction indicated by arrow 239, in an upwards direction along accumulation chamber 226, so as to lift crop material within accumulation chamber 226. As a result, forage material may be rolled as indicated by arrow 241 within accumulation chamber 226 as mat 252 is conveyed into baling chamber 224 where mat 252 is compacted and rolled into a bale, such as bale 40 shown in Figure 2. By peeling off top portions of mat 252, vertical screed belt 238 reduces the likelihood of mat 252 becoming too thick so as to plug the gap between238 and conveyor 236 or so as to plug components within baling chamber 224.

As shown by Figure 4, vertical screed belt 238 turns about an and 243 which is directly opposite to and spaced from a top opposite surface of conveyance system 236 by an uninterrupted gap one of at least 10,16 cm. such that the forage is conveyed from an accumulation chamber into a baling chamber. For purposes of this disclosure, the phrase "uninterrupted" with respect to the gap extending between the end 243 of belt 238 and conveyance system 236 means that there are no other intervening rollers, drums, belts or other structures between end 243 and conveyance system 236. The spacing of 10,16 cm facilitates the conveyance of a sufficient amount of forage for efficient formation of a bale as the baling system traverses a field. In other implementations, the gap 241 may be at least 15,24 cm or may be less than 10,16 cm.

In the example illustrated, vertical screed belt 238 is not vertical, but is slightly tilted towards accumulation chamber 226. Such tilting allows material to roll more efficiently. In other implementations, vertical screed belt 238 may be tilted towards baling chamber 224 or may be in a vertical orientation. In the example illustrated, vertical screed belt 238 partitions baling chamber 224 from accumulation chamber 226. In other implementations, an additional wall may be provided between baling chamber 224 and accumulation chamber 226. In the example illustrated, vertical screed wall 238 has a height of at least 1,22 m so as to accommodate a sufficient accumulated mass or volume of forage illustrate continuous and uninterrupted gathering of forage as the baling system traverses a field. In one implementation, vertical screed wall 238 just below our special equal to the height of accumulation chamber 226.

Figure 5 is a flow diagram of an example method 300 for forming bales of forage. Method 300 increases the speed at which bales may be harvested by facilitating continuous harvesting of forage with fewer interruptions. During periods of time during which a completed bale is discharged, such systems and methods allow forage to be accumulated in an accumulation chamber. To reduce the likelihood of the accumulated forage plugging the baling system, method 300 utilizes a "live wall" provided by a vertical screed conveyance system such as a conveyor belt that extends between the accumulation chamber and a baling chamber. The vertical screed conveyor lifts (and rolls) excess forage within the accumulation chamber as other forage is being conveyed directly beneath the vertical screed conveyor into the baling chamber. Although method 300 is described in the context of being carried out by baling system 220 described above, should be appreciated that method 300 may likewise be carried out with any of the disclosed baling systems with similar baling systems.

As indicated by block 304, the at least one conveyance system 236 conveys forage with at least one conveyance system 236 through an uninterrupted gap 241 of at least 10,16 cm extending from the at least one conveyance system 236 to an end 243 of a vertical screed belt 238 such that the forage is conveyed from an accumulation chamber into a baling chamber. The spacing of 10,16 cm facilitates the conveyance of a sufficient amount of forage for efficient formation of a bale as the baling system traverses a field. In other implementations, the gap 241 may be at least 15,24 cm or may be less than 10,16 cm.

As indicated by block 308, the vertical screed belt 238 lifts the forage within the accumulation chamber as the forage is being conveyed directly beneath the vertical screed belt. As a result, the vertical screed belt 238 peels off any excess forage above the gap 241 to reduce the likelihood of such excess forage plugging the gap 241 or downstream components in the baling chamber. The use of vertical screed 238 facilitates the continuous operation of the baling system, wherein forage may still be gathered and accumulated within accumulation chamber 226 while a completed bale is being discharged from baling chamber 224.

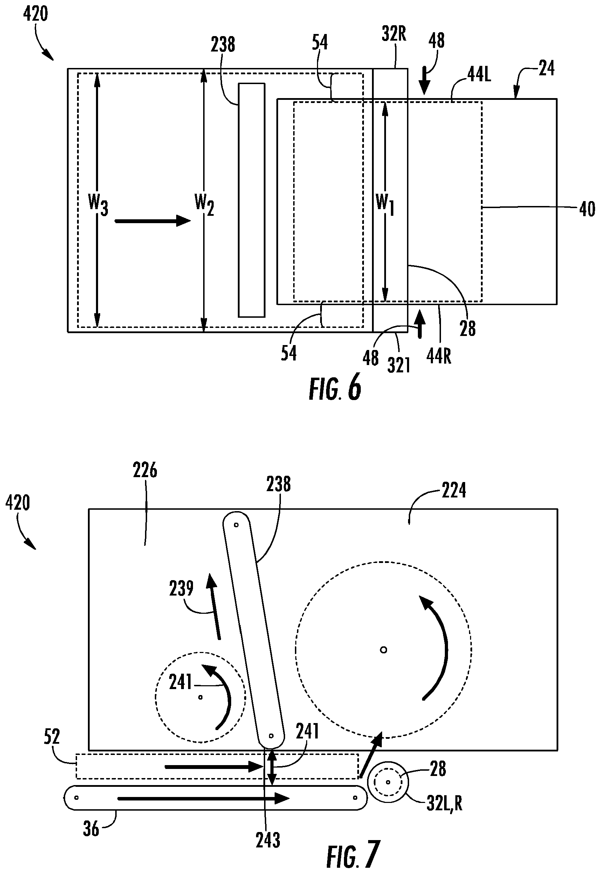

Figures 6 and 7 schematically illustrate portions of an example baling system 420. Baling system 420 is similar to baling system 20 described above except the baling system 420 additionally comprises the vertical screed belt 238 described above. Those remaining components of baling system 420 which correspond to components of baling system 20 are numbered similarly.

As with baling system 20, the at least one conveyance system 36 of baling system 420 provides an additional volume or mass of forage outwardly beyond the ends of rotary feeder 28. This additional volume or mass 54 of forage is engaged by lateral forage movers 32 and inwardly moved to rotary feeder 28. As a result, a greater volume or mass of forage is provided along the axial end portions of rotary feeder 28. This results in a greater volume or mass of forage is deposited along the sides of baling chamber 24, along or adjacent to sidewalls 44. Consequently, the resulting bale 40 has a greater density of forage along its shoulders, enhancing the robustness of bale 40. As with baling system 220, the vertical screed belt 238 lifts the forage within the accumulation chamber as the forage is being conveyed directly beneath the vertical screed belt. As a result, the vertical screed belt 238 peeled off any excess forage above the gap 241 to reduce the likelihood of such excess forage plugging the gap 241 or downstream components in the baling chamber. The use of vertical screed 238 facilitates the continuous operation of the baling system, wherein forage may still be gathered and accumulated within accumulation chamber 226 while a completed bale is being discharged from baling chamber 224.

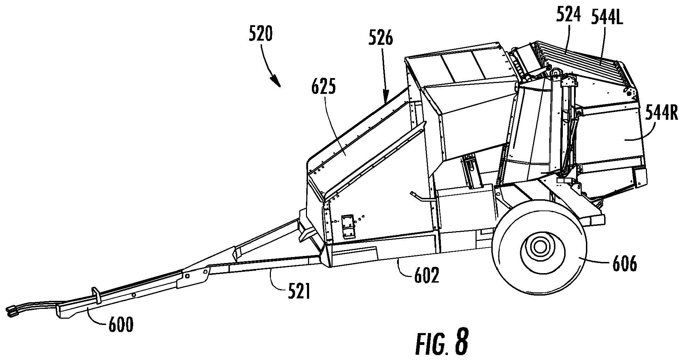

Figures 8-12 illustrate an example forage baling system 520. System 520 facilitates the forming of robust, denser bales and more efficient baling or harvesting of forage material. By increasing the speed at which such bales may be harvested with fewer breakdowns or plugging. System 520 provide for more robust bales having a greater density along shoulders of such bales. System 520 laterally moves and then compresses an additional volume or mass of forage along the sides or shoulders of the bale being formed. The greater density along the shoulders of the bales facilitates more reliable handling and stacking of such bales. The increased density of the bales further facilitates lower-cost storage and transport of such bales.

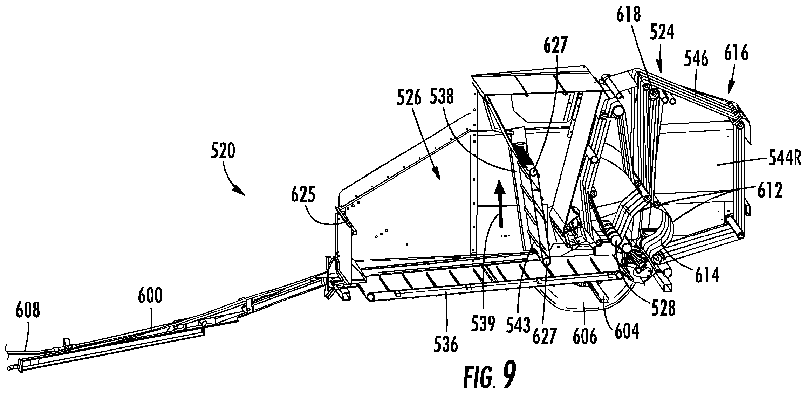

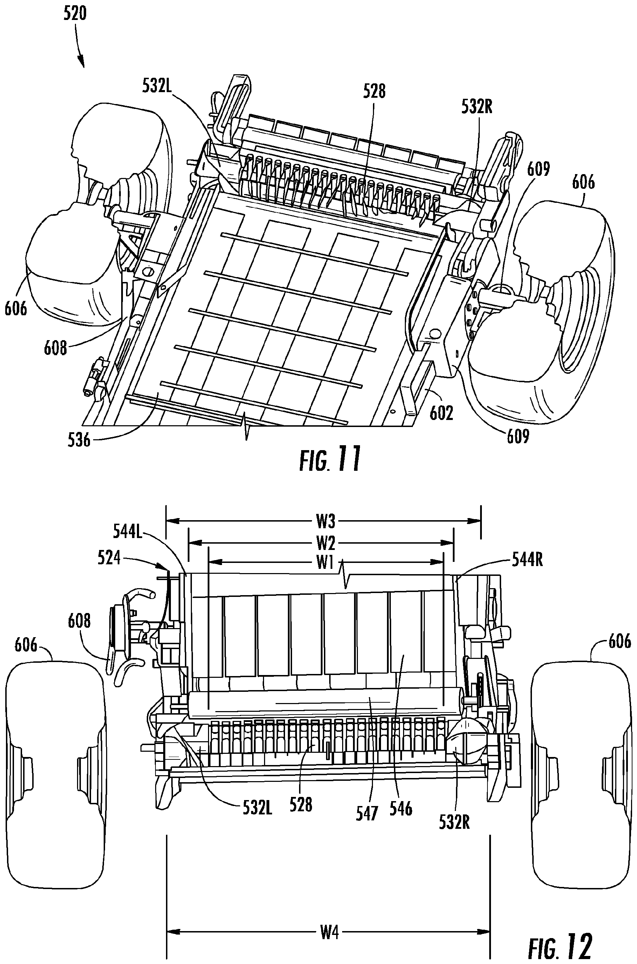

System 520 may also increase the speed at which bales may be harvested by facilitating continuous harvesting of forage with fewer interruptions. During periods of time during which a completed bale is discharged, such systems and methods allow forage to be accumulated in an accumulation chamber. To reduce the likelihood of the accumulated forage plugging the baling system, the disclosed systems and methods utilize a "live wall" provided by a vertical screed conveyance system, such as a conveyor belt, that extends between the accumulation chamber and a baling chamber. The vertical screed conveyor regulation controls the amount of forage being conveyed to the baling chamber by lifting (and rolling) excess forage within the accumulation chamber as other forage is being conveyed directly beneath the vertical screed conveyor into the baling chamber. System 520 comprises chassis 521, baling chamber 524, accumulation chamber 526, rotary feeder 528 (shown in Figure 9), lateral forage movers 532R, 532L (collectively referred to as lateral forage movers 532) (shown in Figures 11 and 12), conveyance system 536, and vertical screed wall 538 (shown in Figure 9).

Chassis 521 comprises a base frame of baling system 520. Chassis 521 supports each of the other remaining components of baling system 521. In the example illustrated, chassis 521 comprises a forward extending towing bar 600, an outer frame 602, an axle 604 and a pair of wheels 606.

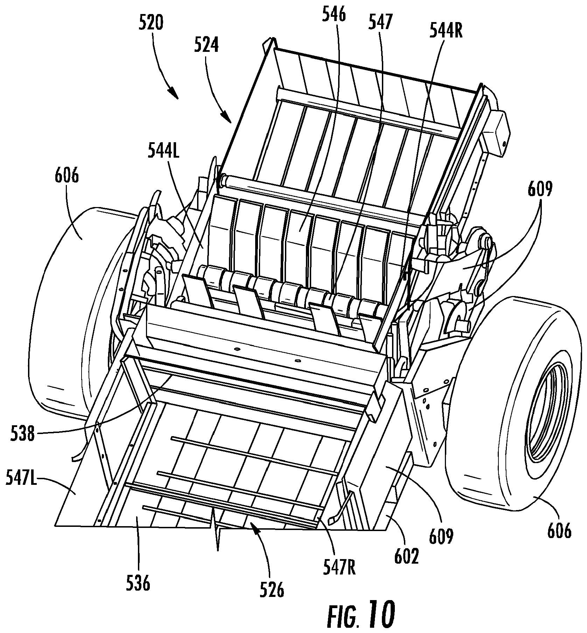

Towing bar 600 facilitates pulling of baling system 520 behind another vehicle, such as a combine harvester. In the example illustrated, towing bar 600 further comprises a hydraulic line 608 by which pressurized hydraulic fluid is supplied to at least one rotary actuator 609 (shown as a hydraulic motor and mechanical transmission in Figure 10) via one or more hydraulic circuits to supply power/torque for the driving of conveyance system 536, baling chamber 524 and vertical screed belt 538. In other implementations, power may be supplied to baling system 520 in other fashions, such as with a power takeoff or electrical line. In some implementations, baling system 520 may comprise an independent power source, such as a battery or internal combustion engine.

Outer frame 602 supports the various rollers and other mechanical components of baling system 520. Outer frame 602 further rotatably supports axle 604. Axle 604 rotatably supports wheels 606.

Baling chamber 524 winds or otherwise compacts received forage into a bale. In the example illustrated, baling chamber 524 is configured as a round baler, forming cylindrical bales of cylindrical windings of forage. Baling chamber 524 comprises sidewalls 544R, 544L (collectively referred to as sidewalls 44) and at least one forage wrapping or winding belt 546. Similar to sidewalls 44, sidewalls 544 define an internal width of the baling chamber 524. Forage being wound or otherwise compacted within baling chamber 524 is contained by such sidewalls 544. The spacing between the opposing sidewalls 544, defining the internal width, controls the width of the bale being formed. As shown by Figure 10, the internal width of baling chamber 524 is less than the internal width of accumulation chamber 526 between its opposing sidewalls 547L and 547R. As will be described hereafter, a greater volume or mass of forage is provided along such sidewalls 544 such that the shoulders of the resulting bale are more dense and are more robust.

Winding belt 546 comprises at least driven belt that winds and compresses forage as it is received from accumulation chamber 526 and lifted by rotary feeder 528. As discussed above, in one implementation, winding belt 546 is driven by a transmission that transmits torque from a hydraulic motor. In the example illustrated, winding belt 546 comprises a series of parallel continuous winding belts that are guided by shafts 547 so as to form a pair of opposing belt expandable regions 612 between which a bale is formed. The pair of opposing belt regions 612 form a volume 614 therebetween into which forage is lifted by rotary feeder 528. The volume 614 gradually expands as the bale grows in size. Upon completion of a bale, a rear portion 616 of baling chamber 524 is pivoted to separate portion 612 too release the completed bale from volume 614.

Rotary feeder 528 feeds forage into the volume 614 between portions 614 of belt 546. Rotary feeder 528 lifts the forage into the baling chamber. Rotary feeder 528, sometimes referred to as a "stuffer roll", stuffs forage into the volume 614 in which the forage is wound or compacted. As shown by Figure 12, rotary feeder 528 has a width W1 less than or equal to the width W2 of baling chamber 524 defined by the internal sides of walls 544. Rotary feeder 528 is generally centered within baling chamber 524. In one implementation, rotary feeder 528 has a width W1 less to the internal width W2 of the baling chamber 524.

Lateral forage movers 532 extend on opposite sides of rotary feeder 528. Lateral forage movers 532 extend from rotary feeder 528 outwardly beyond their respective sidewalls 544. Lateral forage mover 532R extends outwardly beyond sidewall 544R. Lateral forage mover 532L extends outwardly beyond sidewall 544L. Lateral forage movers 532 latterly move forage received from the at least one conveyance system 36 inward, towards a centerline of the baling chamber 524, towards the axial center of rotary feeder 528. In the example illustrated, the outer ends of lateral forage movers 532 are transversely spaced by a spacing or width W3 which is greater than W2. In one implementation, width W2 is up to 1,52 m and no less than 48 while width W3 is 1,83 m.

In the example illustrated, lateral forage movers 532 each comprise an auger which, upon being rotated, latterly moves forage inward towards rotary feeder 528. In one implementation, movers 532 comprise augers with absolutely directed vanes such that as the augers forming movers 532 to rotate in a single direction, the augers convey forage in opposite directions, in direction towards one another. In one implementation, rotary feeder 528 and the augers providing lateral forage movers 532 are all mounted on a single shaft. In another implementation, the augers providing lateral forage movers 532 may be operably coupled to the shaft of rotary feeder 528 so as to be driven at a different proportional speed as compared to rotary feeder 528. In yet other implementations, forage movers 532 may be driven independent of rotary feeder 528.

In some implementations, lateral forage movers 532 may be driven independent of one another. For example, in one implementation, lateral forage mover 532R may be driven at a different speed as compared to lateral forage mover 532L. In such an implementation, lateral forage movers 532 may be driven at different speeds to accommodate varying harvesting conditions. In other implementations, lateral forage movers 532 may comprise other mechanisms to latterly move or otherwise convey forage received from conveyance system 36 towards rotary feeder 528. For example, lateral forage movers 532 may alternatively comprise conveyance systems, reciprocating plates and the like.

Conveyance system 536 conveys forage to rotary feeder 528 as well as to lateral forage movers 532. Conveyance system 536 underlies baling chamber 524 and accumulation chamber 526. Conveyance system 536 may comprise a conveyor belt, a conveyor change, end-to-end and/or side-by-side conveyor belts, end-to-end and/or side-by-side conveyor chains or other mechanisms for carrying and conveying forage. As shown by Figure 12, conveyance system 536 has a width W4 greater than the width W2 of baling chamber 524. In one implementation, conveyance system 536 comprises a single conveyor belt or chain rotating about to spaced rotational axes. In other implementations, conveyance system 536 comprises a plurality of side-by-side conveyor belts or chains. In yet other implementations, conveyance system 536 comprises a series of end-to-end conveyor belts or chains.

Because width W4 of conveyance system 536 is greater than width W2, conveyance system 536 may convey or transport a larger mat of forage, a mat of forage also having a width greater than the width W1 of rotary feeder 528. As a result, conveyance system 536 provides an additional volume or mass of forage outwardly beyond the ends of rotary feeder 528. This additional volume or mass of forage is engaged by lateral forage movers 532 and inwardly moved to rotary feeder 528. As a result, a greater volume or mass of forage is provided along the axial end portions of rotary feeder 528. This results in a greater volume or mass of forage is deposited along the sides of baling chamber 524, along or adjacent to sidewalls 544. Consequently, the resulting bale 540 has a greater density of forage along its shoulders, enhancing the robustness of bale 540.

In one implementation, the width W4 of conveyance system 36 is at least 15,24 cm wider than the width W2 of baling chamber 524. In one implementation, the width W4 of the at least one conveyance system 536 is at least 30,48 cm wider than the width W1 of baling chamber 524. In one implementation, the rotary feeder 528 has an axial length (W1) and the width W4 of conveyance system 536 is at least 15,24 cm greater than the axial length. In one implementation, the rotary feeder 28 has an axial length and the width W4 of conveyance system 536 is at least 30,48 cm greater than the axial length. In one implementation, the conveyance system 536 forms a floor upon which forage is conveyed, wherein the moving floor has a length of at least 2,44 m. In one implementation, the conveyance system 536 forms a floor of an accumulation chamber in which forage is accumulated, such as during periods of time during which a completed bale is being discharged. In one implementation, conveyance system 536 has a width W2 of 1,83 m while the baling chamber 524 has a width W2 of 1,52 m or 1,22 m. In one implementation, the internal width of accumulation chamber 526 is at least 70 inches and nominally 1,83 m while the width of baling chamber 524 is no greater than 1,55 m and nominally 1,52 m or 1,22 m. In the example illustrated, as shown by Figure 8, conveyance system 536 forms a floor of an accumulation chamber that has an upwardly facing opening 625 through which forage may fall into the accumulation chamber.

As shown by Figure 9, vertical screed belt 538 comprises a continuous belt rotatable about two spaced shafts 627 so as to form a vertical moving wall when being rotated. Belt 538 is rotatable in the direction indicated by arrow 539, in an upwards direction along accumulation chamber 526, so as to lift crop material within accumulation chamber 526. As a result, forage material may be rolled in a fashion similar to that shown in Figure 7) within accumulation chamber 526 as mat of forage is conveyed into baling chamber 524 where mat is compacted and rolled into a bale, such as bale 40 shown in Figure 2. By peeling off top portions of the matter forage (similar to the mat 52 shown in Figure 7), vertical screed belt 538 reduces the likelihood of the mat becoming too thick so as to plug the gap between belt 538 and conveyor 536 or so as to plug components within baling chamber 524.

Vertical screed belt 538 turns about an end 543 which is directly opposite to and spaced from a top opposite surface of conveyance system 536 by an uninterrupted gap of at least 10,16 cm. This spacing facilitates the conveyance of crop material into baling chamber 524 for the formation of a bale as screed belt conveyor 538 continues lift forage material within accumulation chamber 526 to peel off forage. The "uninterrupted" gap extending between the end 543 of belt 538 and conveyance system 536 contains no other intervening rollers, drums, belts or other structures. The spacing of 10,16 cm facilitates the conveyance of a sufficient amount of forage for efficient formation of a bale as the baling system traverses a field. In other implementations, the gap may be at least 15,24 cm or may be less than 10,16 cm.

In the example illustrated, vertical screed belt 538 is vertical, but is slightly tilted towards accumulation chamber 526. Such tilting accommodates a larger baling chamber 224. In other implementations, vertical screed belt 538 may be tilted towards baling chamber 524 or may be in a vertical orientation. In the example illustrated, vertical screed belt 538 partitions baling chamber 524 from accumulation chamber 526. In other implementations, an additional wall may be provided between baling chamber 524 and accumulation chamber 526. In the example illustrated, vertical screed wall 538 has a height of at least 1,22 m so as to accommodate a sufficient accumulated mass or volume of forage illustrate continuous and uninterrupted gathering of forage as the baling system traverses a field. In one implementation, vertical screed wall 538 just below our special equal to the height of accumulation chamber 526.

Although the present disclosure has been described with reference to example implementations, workers skilled in the art will recognize that changes may be made in form and detail without departing from scope of the claimed subject matter. The present disclosure described with reference to the example implementations and set forth in the following claims is manifestly intended to be as broad as possible. For example, unless specifically otherwise noted, the claims reciting a single particular element also encompass a plurality of such particular elements. The terms "first", "second", "third" and so on in the claims merely distinguish different elements and, unless otherwise stated, are not to be specifically associated with a particular order or particular numbering of elements in the disclosure.

## Claims

1. A baling system comprising:
a baling chamber (24, 224, 524) in which bales (40) are formed, the baling chamber (24, 224, 524) having a first side wall (44, 544, 44L, 544L) and a second sidewall (44, 544, 44R, 544R) defining a width of the baling chamber (24, 224, 524);
a rotary feeder (28, 528) to lift forage into the baling chamber (24, 224, 524), the rotary feeder (28, 528) having a second width (W1) less than or equal to the width of the baling chamber (24, 224, 524);
a first lateral forage mover (32, 532, 32L, 532L) on a first side of the rotary feeder (28, 528) and extending from the rotary feeder (28, 528) outwardly beyond the first sidewall (44, 544, 44L, 544L);
a second lateral forage mover (32, 532, 32R, 532R) on a second side of the rotary feeder (28, 528) and extending from the rotary feeder (28, 528) outwardly beyond the second sidewall (44, 544, 44R, 544R); and
at least one conveyance system (36, 236, 536) to convey forage to the rotary feeder (28, 528), the first lateral forage mover (32, 532, 32L, 532L) and the second lateral forage mover (32, 532, 32R, 532R), the at least one conveyance system (36, 236, 536) having a width greater than the width of the baling chamber (24, 224, 524);
a forage accumulation chamber (226, 526) in front of the baling chamber (24, 224, 524), wherein the at least one conveyance system (36, 236, 536) underlies the forage accumulation chamber (226, 526) and the baling chamber (24, 224, 524);
a vertical screed belt (238, 538) between the forage accumulation chamber (226, 526) and the baling chamber (24, 224, 524), the vertical screed belt (238, 538) turning about an end directly opposite to and spaced from the conveyance system (36, 236, 536) by at least 10,16 cm, wherein the vertical screed belt (238, 538) is to lift forage in the forage accumulation chamber (226, 526);
**characterized in that**
the forage accumulation chamber (226, 526) comprises a front wall and
sidewalls (544) forming an upwardly facing input opening through which forage falls into the forage accumulation chamber (226, 526).

2. The baling system of claim 1, wherein the width of the at least one conveyance system (36, 236, 536) is at least 15,24 cm wider than the width of the baling chamber (24, 224, 524).

3. The baling system of claim 1 or 2, wherein the width of the at least one conveyance system (36, 236, 536) is at least 30,48 cm wider than the width of the baling chamber (24, 224, 524).

4. The baling system according to at least one of the preceding claims, wherein rotary feeder (28, 528) has an axial length and wherein the width of the at least one conveyance system (36, 236, 536) is at least 15,24 cm greater than the axial length.

5. The baling system according to at least one of the preceding claims, wherein the rotary feeder (28, 528) has an axial length and wherein the width of the at least one conveyance system (36, 236, 536) is at least 30,48 cm greater than the axial length.

6. The baling system according to at least one of the preceding claims, wherein the at least one conveyance system (36, 236, 536) forms a floor having a length of at least 2,44 m.

7. The baling system according to at least one of the preceding claims, wherein a spacing of the end (243) with respect to the at least one conveyance system (36, 236, 536) is fixed.

8. The baling system according to at least one of the preceding claims, wherein the vertical screed belt (238, 538) forms a moving vertical wall having a height of at least 1,22 m.

## Patentansprüche

1. Ballenpresssystem, Folgendes umfassend:
eine Ballenkammer (24, 224, 524), in der Ballen (40) ausgebildet werden, wobei die Ballenkammer (24, 224, 524) eine erste Seitenwand (44, 544, 44L, 544L) und eine zweite Seitenwand (44, 544, 44R, 544R), die eine Breite der Ballenkammer (24, 224, 524) definieren, aufweist;
einen Drehzuführer (28, 528), um Futtermittel in die Ballenkammer (24, 224, 524) zu heben, wobei der Drehzuführer (28, 528) eine zweite Breite (W1) aufweist,
die kleiner als die oder gleich der Breite der Ballenkammer (24, 224, 524) ist;
eine erste seitliche Futtermittelbewegungseinrichtung (32, 532, 32L, 532L) auf einer ersten Seite des Drehzuführers (28, 528), die sich vom Drehzuführer (28, 528) über die erste Seitenwand (44, 544, 44L, 544L) hinaus nach außen erstreckt;
eine zweite seitliche Futtermittelbewegungseinrichtung (32, 532, 32R, 532R) auf einer zweiten Seite des Drehzuführers (28, 528), die sich vom Drehzuführer (28, 528) über die zweite Seitenwand (44, 544, 44R, 544R) hinaus nach außen erstreckt; und mindestens ein Fördersystem (36, 236, 536), um Futtermittel zum Drehzuführer (28, 528), zur ersten seitlichen Futtermittelbewegungseinrichtung (32, 532, 32L, 532L) und zur zweiten seitlichen Futtermittelbewegungseinrichtung (32, 532, 32R, 532R) zu befördern, wobei das mindestens eine Fördersystem (36, 236, 536) eine Breite aufweist, die größer als die Breite der Ballenkammer (24, 224, 524) ist;
eine Futtermittelsammelkammer (226, 526) vor der Ballenkammer (24, 224, 524), wobei das mindestens eine Fördersystem (36, 236, 536) unter der Futtermittelsammelkammer (226, 526) und der Ballenkammer (24, 224, 524) liegt;
ein vertikales Abziehband (238, 538) zwischen der Futtermittelsammelkammer (226, 526) und der Ballenkammer (24, 224, 524), wobei sich das vertikale Abziehband (238, 538) um ein Ende dreht, das dem Fördersystem (36, 236, 536) direkt entgegengesetzt und davon um mindestens 10,16 cm beabstandet ist, wobei das vertikale Abziehband (238, 538) dazu ausgelegt ist, Futtermittel in die Futtermittelsammelkammer (226, 526) zu heben;
**dadurch gekennzeichnet, dass**
die Futtermittelsammelkammer (226, 526) eine Vorderwand und Seitenwände (544) umfasst, die eine nach oben gewandte Eingangsöffnung ausbilden, durch die Futtermittel in die Futtermittelsammelkammer (226, 526) fällt.

2. Ballenpresssystem nach Anspruch 1, wobei die Breite des mindestens einen Fördersystems (36, 236, 536) mindestens 15,24 cm breiter ist als die Breite der Ballenkammer (24, 224, 524).

3. Ballenpresssystem nach Anspruch 1 oder 2, wobei die Breite des mindestens einen Fördersystems (36, 236, 536) mindestens 30,48 cm breiter ist als die Breite der Ballenkammer (24, 224, 524).

4. Ballenpresssystem nach mindestens einem der vorstehenden Ansprüche, wobei der Drehzuführer (28, 528) eine axiale Länge aufweist und wobei die Breite des mindestens einen Fördersystems (36, 236, 536) mindestens 15,24 cm größer ist als die axiale Länge.

5. Ballenpresssystem nach mindestens einem der vorstehenden Ansprüche, wobei der Drehzuführer (28, 528) eine axiale Länge aufweist und wobei die Breite des mindestens einen Fördersystems (36, 236, 536) mindestens 30,48 cm größer ist als die axiale Länge.

6. Ballenpresssystem nach mindestens einem der vorstehenden Ansprüche, wobei das mindestens eine Fördersystem (36, 236, 536) einen Boden mit einer Länge von mindestens 2,44 m ausbildet.

7. Ballenpresssystem nach mindestens einem der vorstehenden Ansprüche, wobei ein Abstand des Endes (243) in Bezug zu dem mindestens einen Fördersystem (36, 236, 536) feststehend ist.

8. Ballenpresssystem nach mindestens einem der vorstehenden Ansprüche, wobei das vertikale Abziehband (238, 538) eine bewegliche vertikale Wand mit einer Höhe von mindestens 1,22 m ausbildet.

## Revendications

1. Système de mise en balles comprenant :
une chambre de compression (24, 224, 524) dans laquelle des balles (40) sont formées, la chambre de compression (24, 224, 524) comportant une première paroi latérale (44, 544, 44L, 544L) et une seconde paroi latérale (44, 544, 44R, 544R) définissant une largeur de la chambre de compression (24, 224, 524) ;
un dispositif d'alimentation rotatif (28, 528) destiné à soulever du fourrage pour l'introduire dans la chambre de compression (24, 224, 524), le dispositif d'alimentation rotatif (28, 528) présentant une seconde largeur (W1) inférieure ou égale à la largeur de la chambre de compression (24, 224, 524) ;
un premier dispositif latéral de déplacement de fourrage (32, 532, 32L, 532L) sur un premier côté du dispositif d'alimentation rotatif (28, 528), s'étendant à partir du dispositif d'alimentation rotatif (28, 528) vers l'extérieur au-delà de la première paroi latérale (44, 544, 44L, 544L) ;
un second dispositif latéral de déplacement de fourrage (32, 532, 32R, 532R) sur un second côté du dispositif d'alimentation rotatif (28, 528), s'étendant à partir du dispositif d'alimentation rotatif (28, 528) vers l'extérieur au-delà de la seconde paroi latérale (44, 544, 44R, 544R) ; et
au moins un système de transport (36, 236, 536) destiné à transporter du fourrage au dispositif d'alimentation rotatif (28, 528), au premier dispositif latéral de déplacement de fourrage (32, 532, 32L, 532L) et au second dispositif latéral de déplacement de fourrage (32, 532, 32R, 532R), l'au moins un système de transport (36, 236, 536) présentant une largeur supérieure à la largeur de la chambre de compression (24, 224, 524) ;
une chambre d'accumulation de fourrage (226, 526) devant la chambre de compression (24, 224, 524), l'au moins un système de transport (36, 236, 536) étant situé sous la chambre d'accumulation de fourrage (226, 526) et la chambre de compression (24, 224, 524) ;
une courroie d'égalisation verticale (238, 538) entre la chambre d'accumulation de fourrage (226, 526) et la chambre de compression (24, 224, 524), la courroie d'égalisation verticale (238, 538) tournant autour d'une extrémité directement en regard du système de transport (36, 236, 536) et espacée de celui-ci d'au moins 10,16 cm, la courroie d'égalisation verticale (238, 538) étant destinée à soulever du fourrage dans la chambre d'accumulation de fourrage (226, 526) ;
**caractérisé en ce que**
la chambre d'accumulation de fourrage (226, 526) comprend une paroi avant et des parois latérales (544) formant une ouverture d'entrée orientée vers le haut à travers laquelle le fourrage tombe dans la chambre d'accumulation de fourrage (226, 526).

2. Système de mise en balles selon la revendication 1, dans lequel la largeur de l'au moins un système de transport (36, 236, 536) est supérieure d'au moins 15,24 cm à la largeur de la chambre de compression (24, 224, 524) .

3. Système de mise en balles selon la revendication 1 ou 2, dans lequel la largeur de l'au moins un système de transport (36, 236, 536) est supérieure d'au moins 30,48 cm à la largeur de la chambre de compression (24, 224, 524) .

4. Système de mise en balles selon au moins une des revendications précédentes, dans lequel le dispositif d'alimentation rotatif (28, 528) présente une longueur axiale et dans lequel la largeur de l'au moins un système de transport (36, 236, 536) est supérieure d'au moins 15,24 cm à la longueur axiale.

5. Système de mise en balles selon au moins une des revendications précédentes, dans lequel le dispositif d'alimentation rotatif (28, 528) présente une longueur axiale et dans lequel la largeur de l'au moins un système de transport (36, 236, 536) est supérieure d'au moins 30,48 cm à la longueur axiale.

6. Système de mise en balles selon au moins une des revendications précédentes, dans lequel l'au moins un système de transport (36, 236, 536) forme un plancher présentant une longueur d'au moins 2,44 m.

7. Système de mise en balles selon au moins une des revendications précédentes, dans lequel un espacement de l'extrémité (243) par rapport à l'au moins un système de transport (36, 236, 536) est fixe.

8. Système de mise en balles selon au moins une des revendications précédentes, dans lequel la courroie d'égalisation verticale (238, 538) forme une paroi verticale mobile présentant une hauteur d'au moins 1,22 m.
